# EUROPEAN PATENT APPLICATION

(11) **EP 4 837 758 A1**
(43) Date of publication of application: **11.11.2026**
(21) Application number: 25736134.5
(22) Date of filing: 02.01.2025
(51) Int. Cl.: B60J 3/04, G02F 1/01

(54) **AUTOMATIC PARTITIONING METHOD FOR DIMMING GLASS AND AUTOMATIC PARTITIONING SYSTEM**

(30) Priority: 02.01.2024 CN 202410005888
(71) Applicant: Boe Technology Group Co., Ltd., Beijing 100015 (CN); Beijing BOE Technology Development Co., Ltd., Daxing District Beijing 100176 (CN)
(72) Inventor: ZHAO, Junjie, Beijing 100176 (CN); FENG, Hongbo, Beijing 100176 (CN); SU, Jing, Beijing 100176 (CN); CHEN, Shaobei, Beijing 100176 (CN); JU, Xiaoqian, Beijing 100176 (CN)
(74) Representative: Brötz, Helmut
(86) International application number: PCT/CN2025/070081
(87) International publication number: WO 2025/146069

(57) **Abstract**

An automatic partitioning method for dimming glass and an automatic partitioning system. A dimming glass comprises a plurality of physical partitions, each physical partition being configured to receive a separate control signal, so as to change the light transmittance. The automatic partitioning method comprises: detecting a cabin state of a vehicle equipped with dimming glass; and on the basis of the cabin state, re-partitioning the plurality of physical partitions of the dimming glass into at least one dimming partition, each dimming partition comprising at least one physical partition, and physical partitions in a same dimming partition being configured to receive a same control signal. Therefore, the automatic partitioning method for dimming glass can provide users with higher-quality and convenient dimming effects, thus improving the user experience.

## Description

The present application claims the priority of Chinese Patent Application No. 202410005888.1 filed on January 2, 2024, which is hereby incorporated by reference in its entirety as a part of the present application.

### TECHNICAL FIELD

Embodiments of the present disclosure relate to an automatic partitioning method for dimmable glass and an automatic partitioning system.

### BACKGROUND

With the development of intelligent, electrified, and connected vehicles, smart cockpit technology has become a major part of automobiles. An important component of the smart cockpit is the automotive glass, including front and rear windshields, sunroofs, and side windows, etc. Dimmable glass is an important development direction for automotive glass. Currently, dimmable glass mainly includes the following types: polymer dispersed liquid crystal (PDLC) glass, electrochromic (EC) glass, and dye liquid crystal (Dye-LC) glass.

Polymer dispersed liquid crystal glass places liquid crystal droplets into a glass interlayer, using an electric field to control the orientation of the liquid crystal molecules, allowing light to pass through the gaps between the liquid crystal molecules. Polymer dispersed liquid crystal glass has a lower cost, but higher energy consumption and general heat insulation effect.

Electrochromic glass typically consists of three parts: an ion storage layer, a solid electrolyte, and an electrochromic layer. Under the action of an applied electric field, electrochromic materials can achieve stable and reversible changes in reflectance, absorptance, or transmittance, and can adjust the glass from transparent to blue or gray-black. Electrochromic glass has advantages such as low operating voltage, low energy consumption, strong heat insulation effect, and also has a power-off memory function. A disadvantage of electrochromic glass is its relatively slow response speed.

Dye liquid crystal glass is a new type of color-changing glass technology. Dichroic dye is added to the liquid crystal material. In a normal state, the glass appears gray-black and can absorb light. In a powered state, the voltage controls the deflection of the dye liquid crystal molecules, allowing light to pass through the dye liquid crystal layer. The glass has a high degree of opacity, providing better privacy protection. Dye liquid crystal glass has advantages such as high transmittance and fast response speed.

### SUMMARY

Embodiments of the present disclosure provide an automatic partitioning method for dimmable glass and an automatic partitioning system. The dimmable glass includes a plurality of physical partitions, each of the plurality of physical partitions is configured to receive an individual control signal to change light transmittance. The automatic partitioning method includes: detecting a cockpit state of a cockpit of a vehicle equipped with the dimmable glass; and re-dividing the plurality of physical partitions of the dimmable glass into at least one dimming partition according to the cockpit state, each of the at least one dimming partition includes at least one physical partition of the plurality of physical partitions, and the at least one physical partition in a same dimming partition is configured to receive a same control signal. Thus, the automatic partitioning method for dimmable glass can re-divide the plurality of physical partitions of the dimmable glass into at least one dimming partition according to the cockpit state, such as the number and distribution of users and the seat state, so that the dimming partition can match the cockpit state, providing users with better and more convenient dimming effects and enhancing user experience.

At least one embodiment of the present disclosure provides an automatic partitioning method for dimmable glass, the dimmable glass includes a plurality of physical partitions, each of the plurality of physical partitions is configured to receive an individual control signal to change light transmittance, and the automatic partitioning method includes: detecting a cockpit state of a cockpit of a vehicle equipped with the dimmable glass; and re-dividing the plurality of physical partitions of the dimmable glass into at least one dimming partition according to the cockpit state, where each of the at least one dimming partition includes at least one physical partition of the plurality of physical partitions, and the at least one physical partition in a same dimming partition is configured to receive a same control signal.

For example, the automatic partitioning method provided by an embodiment of the present disclosure further includes: receiving a control instruction from a user; determining a dimming partition where the user is located according to the user's position; and sending a same control signal to the at least one physical partition in the dimming partition where the user is located.

For example, in the automatic partitioning method provided by an embodiment of the present disclosure, determining the dimming partition where the user is located according to the user's position includes: determining a seat where the user is located; determining the dimming partition where the user is located according to a physical partition corresponding to the seat where the user is located.

For example, in the automatic partitioning method provided by an embodiment of the present disclosure, the cockpit includes a plurality of seats, and the plurality of physical partitions are arranged in one-to-one correspondence with the plurality of seats. For example, in the automatic partitioning method provided by an embodiment of the present disclosure, the cockpit state includes at least one of a seat state and a user state.

For example, in the automatic partitioning method provided by an embodiment of the present disclosure, the cockpit state includes the seat state and the user state, and re-dividing the plurality of physical partitions of the dimmable glass into at least one dimming partition according to the cockpit state includes: respectively determining whether a plurality of seats in the cockpit are in a reclined state; when the seat state is that all of the plurality of seats are in the reclined state, re-dividing the plurality of physical partitions into one dimming partition.

For example, in the automatic partitioning method provided by an embodiment of the present disclosure, the user state includes a number of users and user positions, and re-dividing the plurality of physical partitions of the dimmable glass into at least one dimming partition according to the cockpit state further includes: detecting the number of users and the user positions; when the seat state is that at least one of the plurality of seats is not reclined, re-dividing the plurality of physical partitions of the dimmable glass into at least one dimming partition according to the number of users and the user positions.

For example, in the automatic partitioning method provided by an embodiment of the present disclosure, re-dividing the plurality of physical partitions of the dimmable glass into at least one dimming partition according to the number of users and the user positions includes: when the number of users is one, re-dividing the plurality of physical partitions into one dimming partition.

For example, in the automatic partitioning method provided by an embodiment of the present disclosure, re-dividing the plurality of physical partitions of the dimmable glass into at least one dimming partition according to the number of users and the user positions includes: when the number of users is N, re-dividing the plurality of physical partitions into N dimming partitions according to the number of users, each of the users is assigned one of the dimming partitions, where N is a positive integer greater than or equal to 1.

For example, in the automatic partitioning method provided by an embodiment of the present disclosure, the cockpit state includes a seat state, and re-dividing the plurality of physical partitions of the dimmable glass into at least one dimming partition according to the cockpit state includes: respectively determining whether a plurality of seats in the cockpit are in a reclined state; when the seat state is that all of the plurality of seats are in the reclined state, re-dividing the plurality of physical partitions into one dimming partition.

For example, in the automatic partitioning method provided by an embodiment of the present disclosure, re-dividing the plurality of physical partitions of the dimmable glass into at least one dimming partition according to the cockpit state includes: when the seat state is that at least one of the plurality of seats is not reclined, determining a number of seats in a non-reclined state; re-dividing the plurality of physical partitions of the dimmable glass into at least one dimming partition according to the number of seats in the non-reclined state, wherein each of the seats in the non-reclined state is assigned one of the dimming partitions.

For example, in the automatic partitioning method provided by an embodiment of the present disclosure, the vehicle includes a traveling direction, and re-dividing the plurality of physical partitions of the dimmable glass into at least one dimming partition according to the number of seats in the non-reclined state includes: dividing seats in a reclined state and the seats in a non-reclined state that are adjacent in the traveling direction into the same dimming partition.

For example, in the automatic partitioning method provided by an embodiment of the present disclosure, the cockpit state includes a user state, the user state includes a number of users and user positions, and re-dividing the plurality of physical partitions of the dimmable glass into at least one dimming partition according to the cockpit state includes: detecting the number of users and the user positions; re-dividing the plurality of physical partitions into one dimming partition according to the number of users and the user positions.

For example, in the automatic partitioning method provided by an embodiment of the present disclosure, re-dividing the plurality of physical partitions into one dimming partition according to the number of users and the user positions includes: when the number of users is one, re-dividing the plurality of physical partitions into one dimming partition.

For example, in the automatic partitioning method provided by an embodiment of the present disclosure, re-dividing the plurality of physical partitions into one dimming partition according to the number of users and the user positions includes: when the number of users is N, re-dividing the plurality of physical partitions into N dimming partitions according to the number of users, each of the users is assigned one of the dimming partitions, where N is a positive integer greater than or equal to 1.

At least one embodiment of the present disclosure further provides an automatic partitioning system for dimmable glass, wherein the dimmable glass includes a plurality of physical partitions, each of the plurality of physical partitions is configured to receive an individual control signal to change light transmittance, and the automatic partitioning system includes: a multi-channel controller, connected to the plurality of physical partitions respectively, and configured to respectively apply control signals to the plurality of physical partitions; a central control system, communicatively connected to the multi-channel controller, the central control system being configured for: detecting a cockpit state of a cockpit of a vehicle equipped with the dimmable glass; re-dividing the plurality of physical partitions of the dimmable glass into at least one dimming partition according to the cockpit state; and controlling the multi-channel controller to send a same control signal to physical partitions in a same dimming partition, each of the at least one dimming partition includes at least one physical partition of the plurality of physical partitions.

For example, the automatic partitioning system provided by an embodiment of the present disclosure further includes: an input module, communicatively connected to the central control system, wherein the input module is configured to receive a control instruction from a user, and the central control system is further configured for: determining a dimming partition where the user is located according to the user's position; and controlling the multi-channel controller to send a same control signal to the at least one physical partition in the dimming partition where the user is located.

For example, in the automatic partitioning system provided by an embodiment of the present disclosure, the cockpit includes a plurality of seats, and the plurality of physical partitions are arranged in one-to-one correspondence with the plurality of seats.

For example, in the automatic partitioning system provided by an embodiment of the present disclosure, determining the dimming partition where the user is located according to the user's position includes: determining a seat where the user is located; determining the dimming partition where the user is located according to a physical partition corresponding to the seat where the user is located.

For example, in the automatic partitioning system provided by an embodiment of the present disclosure, the cockpit state includes at least one of a seat state and a user state.

For example, the automatic partitioning system provided by an embodiment of the present disclosure further includes: an image sensor, configured to acquire an image inside the cockpit to obtain at least one of the seat state and the user state.

For example, the automatic partitioning system provided by an embodiment of the present disclosure further includes: a pressure sensor, configured to be disposed on a seat in the cockpit and configured to detect pressure on the seat; and a tilt angle sensor, disposed on the seat in the cockpit and configured to detect a tilt angle of a seat back.

### BRIEF DESCRIPTION OF DRAWINGS

In order to clearly illustrate technical solutions of the embodiments of the present disclosure, the drawings of the embodiments will be briefly described. It is obvious that the described drawings in the following are only related to some embodiments of the present disclosure and thus are not construed as any limitation to the present disclosure.
Fig. 1 is a schematic diagram of a cockpit and correspondingly arranged dimmable glass according to an embodiment of the present disclosure;
Fig. 2 is a schematic diagram of an automatic partitioning method for dimmable glass according to an embodiment of the present disclosure;
Fig. 3A and Fig. 3B are schematic diagrams of automatic partitioning of dimmable glass according to an embodiment of the present disclosure;
Fig. 4A-Fig. 4C are schematic diagrams of another automatic partitioning of dimmable glass according to an embodiment of the present disclosure;
Fig. 5A- Fig. 5B are schematic diagrams of another automatic partitioning of dimmable glass according to an embodiment of the present disclosure;
Fig. 6A- Fig. 6C are schematic diagrams of another automatic partitioning of dimmable glass according to an embodiment of the present disclosure;
Fig. 7A- Fig. 7C are schematic diagrams of another automatic partitioning of dimmable glass according to an embodiment of the present disclosure;
Fig. 8A and Fig. 8B are schematic diagrams of another automatic partitioning of dimmable glass according to an embodiment of the present disclosure;
Fig. 9 is a schematic diagram of another automatic partitioning of dimmable glass according to an embodiment of the present disclosure;
Fig. 10 is a schematic diagram of another automatic partitioning of dimmable glass according to an embodiment of the present disclosure;
Fig. 11A and Fig. 11B are schematic diagrams of another automatic partitioning of dimmable glass according to an embodiment of the present disclosure;
Fig. 12A and Fig. 12B are schematic diagrams of another automatic partitioning of dimmable glass according to an embodiment of the present disclosure;
Fig. 13A and Fig. 13B are schematic diagrams of another automatic partitioning of dimmable glass according to an embodiment of the present disclosure;
Fig. 14A and Fig. 14B are schematic diagrams of another automatic partitioning of dimmable glass according to an embodiment of the present disclosure;
Fig. 15A and Fig. 15B are schematic diagrams of another automatic partitioning of dimmable glass according to an embodiment of the present disclosure;
Fig. 16 is a schematic diagram of another automatic partitioning of dimmable glass according to an embodiment of the present disclosure;
Fig. 17 is a schematic diagram of another automatic partitioning of dimmable glass according to an embodiment of the present disclosure;
Fig. 18 is a schematic diagram of another automatic partitioning of dimmable glass according to an embodiment of the present disclosure;
Fig. 19A and Fig. 19B are schematic diagrams of another automatic partitioning of dimmable glass according to an embodiment of the present disclosure;
Fig. 20 is a schematic diagram of another automatic partitioning of dimmable glass according to an embodiment of the present disclosure;
Fig. 21 is a schematic diagram of another automatic partitioning of dimmable glass according to an embodiment of the present disclosure;
Fig. 22 is a schematic diagram of an automatic partitioning system for dimmable glass according to an embodiment of the present disclosure;
Fig. 23 is a schematic diagram of another automatic partitioning system for dimmable glass according to an embodiment of the present disclosure.

### DETAILED DESCRIPTION

In order to make the objectives, technical solutions, and advantages of the embodiments of the present disclosure clearer, the technical solutions of the embodiments of the present disclosure will be clearly and completely described below in conjunction with the drawings of the embodiments of the present disclosure. Obviously, the described embodiments are a part, but not all, of the embodiments of the present disclosure. Based on the described embodiments of the present disclosure, all other embodiments obtained by a person of ordinary skill in the art without creative labor fall within the protection scope of the present disclosure.

Unless otherwise defined, the technical terms or scientific terms used in the present disclosure shall have the usual meanings understood by a person having ordinary skill in the art to which the present disclosure belongs. The terms "first", "second" and similar words used in the present disclosure do not indicate any order, quantity, or importance, but are merely used to distinguish different components. The words "including" or "comprising" and similar words mean that the elements or objects appearing before the word encompass the elements or objects listed after the word and their equivalents, without excluding other elements or objects.

With the development of smart cars, cars are increasingly becoming user-centric, providing diversified functions to meet users' diverse car usage experiences. Taking a six-seater car as an example, the six seats can be divided into three rows, each seat can be reclined, and when all are reclined, they can be turned into a large bed; when all of the seats are upright, six passengers can be seated. Therefore, a six-seater car can be transformed into zero-seat, one-seat, ..., six-seat configurations.

In order to provide users with a better riding experience, it is needed to provide users with a suitable light environment. By automatically setting the dimmable glass partitions, different light environments can be provided for different passengers to meet their needs.

In this regard, embodiments of the present disclosure provide an automatic partitioning method for dimmable glass. The dimmable glass includes a plurality of physical partitions, each of the plurality of physical partitions is configured to receive an individual control signal to change light transmittance. The automatic partitioning method includes: detecting a cockpit state of a cockpit of a vehicle equipped with the dimmable glass; and re-dividing the plurality of physical partitions of the dimmable glass into at least one dimming partition according to the cockpit state, each of the at least one dimming partition includes at least one physical partition of the plurality of physical partitions, and the at least one physical partition in a same dimming partition is configured to receive a same control signal. Thus, the automatic partitioning method for dimmable glass can re-divide the plurality of physical partitions of the dimmable glass into at least one dimming partition according to the cockpit state, such as the number and distribution of users and the seat state, so that the dimming partition can match the cockpit state, providing users with better and more convenient dimming effects and enhancing user experience.

Embodiments of the present disclosure further provide an automatic partitioning system for dimmable glass. The dimmable glass includes a plurality of physical partitions, each of the plurality of physical partitions is configured to receive an individual control signal to change light transmittance; the automatic partitioning system includes: a multi-channel controller, connected to the plurality of physical partitions respectively, and configured to respectively apply control signals to the plurality of physical partitions; a central control system, communicatively connected to the multi-channel controller, the central control system being configured for: detecting a cockpit state of a cockpit of a vehicle equipped with the dimmable glass; re-dividing the plurality of physical partitions of the dimmable glass into at least one dimming partition according to the cockpit state; and controlling the multi-channel controller to send a same control signal to the physical partitions in a same dimming partition, each of the at least one dimming partition includes at least one of the plurality of physical partitions. Thus, the automatic partitioning system for dimmable glass can re-divide the plurality of physical partitions of the dimmable glass into at least one dimming partition according to the cockpit state, such as the number and distribution of users and the seat state, so that the dimming partition can match the cockpit state, providing users with better and more convenient dimming effects and enhancing user experience.

Hereinafter, the automatic partitioning method and the automatic partitioning system for dimmable glass provided by the embodiments of the present disclosure will be described in detail with reference to the accompanying drawings.

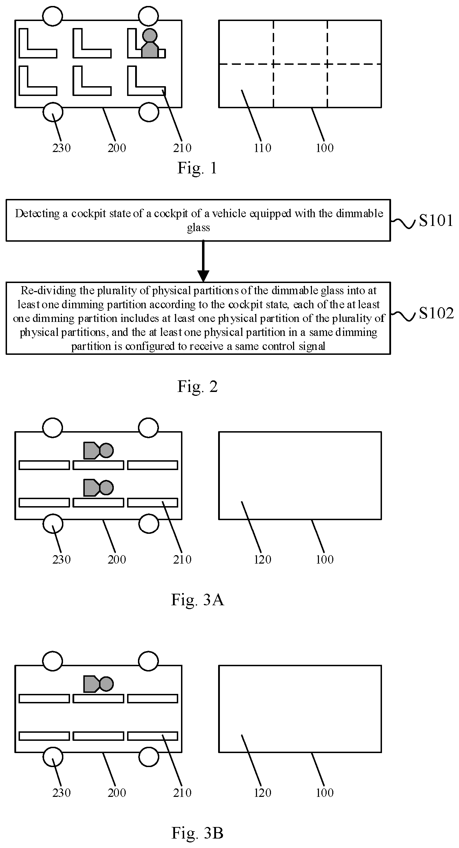

Fig. 1 is a schematic diagram of a cockpit and correspondingly arranged dimmable glass according to an embodiment of the present disclosure; Fig. 2 is a schematic diagram of an automatic partitioning method for dimmable glass according to an embodiment of the present disclosure.

As illustrated by Fig. 1, the dimmable glass 100 includes a plurality of physical partitions 110, each of the plurality of physical partitions 110 is configured to receive an individual control signal to change light transmittance. It should be noted that although the dimmable glass shown in Fig. 1 has a planar shape, the embodiments of the present disclosure include but are not limited thereto, and the dimmable glass may be curved glass.

For example, each of the plurality of physical partitions 110 is provided with an independent drive electrode and a drive line connected to the drive electrode. A controller can control the light transmittance of each physical partition by applying a control signal to the drive electrode.

As illustrated by Fig. 2, the automatic partitioning method includes the following steps S101-S102.

Step S101: detecting a cockpit state of a cockpit of a vehicle equipped with the dimmable glass.

For example, the cockpit state may include at least one of a seat state and a user state. In this case, the cockpit state may be detected by an image sensor, an infrared sensor, a pressure sensor, a seat back tilt angle sensor, and the embodiments of the present disclosure are not limited thereto.

Step S102: re-dividing the plurality of physical partitions of the dimmable glass into at least one dimming partition according to the cockpit state, each of the at least one dimming partition includes at least one physical partition of the plurality of physical partitions, and the at least one physical partition in a same dimming partition is configured to receive a same control signal.

As mentioned above, in order to provide diversified functions, the seats of a smart car can be reclined according to user needs and instructions. According to the reclining state of the seats and the distribution state of users in the cockpit, the cockpit can be divided into different sub-areas, and users in different sub-areas require the same light environment for that sub-area. Because these sub-areas do not correspond to the physical partitions of the dimmable glass, if the user manually adjusts the light transmittance of each physical partition, it will greatly increase the difficulty of user operation and consume the user's patience. Therefore, there is a need for a method that can automatically partition the dimmable glass according to the reclining state of the seats and the distribution state of users in the cockpit.

In this regard, in the embodiments of the present disclosure, according to the cockpit state, such as the number and distribution of users and the seat state, the automatic partitioning method re-divides the plurality of physical partitions of the dimmable glass into at least one dimming partition, so that the dimming partition can match the cockpit state, and the physical partitions in the same dimming partition are configured to receive the same control signal. In this case, the user or the central control system only needs to send an instruction or signal to the dimming partition to complete the dimming of the entire dimming partition, greatly reducing the difficulty of user operation and providing a uniform light environment for each dimming area, thereby enhancing the user experience. It should be noted that after automatic partitioning, the light transmittance of each dimming partition can be adjusted according to the user's instruction, or can be adjusted according to preset parameters, and the embodiments of the present disclosure are not limited thereto.

In some examples, as illustrated by Fig. 1, the cockpit 200 includes a plurality of seats 210, and the plurality of physical partitions 110 may be arranged in one-to-one correspondence with the plurality of seats 210, i.e., the number of physical partitions is equal to the number of seats. Alternatively, the number of physical partitions may be less than or greater than the number of seats. When the number of physical partitions is less than the number of seats (e.g., a five-seater car is provided with three physical partitions, located at left front, right front, and rear row respectively); when the number of physical partitions is greater than the number of seats, e.g., a five-seater car may be provided with ten physical partitions, allowing for more precise adjustment of the light environment.

Taking a six-seater car as an example, when all six seats are reclined and there is only one user, the entire cockpit only needs one dimming partition; at this time, the user only needs to perform one operation to adjust the light environment of the entire cockpit, without separately adjusting the physical partitions corresponding to the six seats. Still taking a six-seater car as an example, when the front two of the six seats remain upright, the rear four of the six seats are all reclined, one user is in the front row, and another user is in the rear two rows, the entire cockpit only needs two dimming partitions; at this time, the front row user only needs to perform one operation to adjust the front row light environment according to his needs, without adjusting the two physical partitions corresponding to the front row, and the rear row user also only needs to perform one operation to adjust the rear row light environment according to his needs, without adjusting the four physical partitions corresponding to the rear row. It should be noted that because there is a situation where all six seats remain upright and there are six users, the dimmable glass should have at least six physical partitions, but in other application scenarios, so many partitions are not needed. Therefore, the above automatic partitioning method can meet more application scenarios while maintaining high efficiency and convenience.

In some examples, the automatic partitioning method further includes: receiving a control instruction from a user; determining the dimming partition where the user is located according to the user's position; and sending the same control signal to the at least one physical partition in the dimming partition where the user is located. Thus, the automatic partitioning method can receive the user's control instruction to adjust the light environment of the dimming partition where the user is located. Moreover, the automatic partitioning method can also automatically determine the dimming partition where the user is located, without requiring the user to select or operate, further reducing the difficulty of operation and improving convenience.

In some examples, determining the dimming partition where the user is located according to the user's position includes: determining the seat where the user is located; determining a dimming partition where the user is located according to the physical partition corresponding to the seat where the user is located. Thus, the automatic partitioning method can determine the dimming partition where the user is located based on the user's position.

For example, at least one of an image sensor, an infrared sensor, and a pressure sensor on the seat may be used to determine the position of the seat where the user is located.

In some examples, the aforementioned cockpit state includes at least one of a seat state and a user state. The seat state may include whether a seat is reclined, and the user state includes the number of users and their distribution within the cockpit.

In some examples, the cockpit state includes a seat state and a user state, and re-dividing the plurality of physical partitions of the dimmable glass into at least one dimming partition according to the cockpit state includes: respectively determining whether the plurality of seats in the cockpit are in a reclined state; when the seat state is that all of the plurality of seats are in the reclined state, re-dividing the plurality of physical partitions into one dimming partition. When the seats are reclined, they may form a bed together with other seats. Therefore, by respectively determining whether the plurality of seats in the cockpit are in a reclined state, it can be determined whether a bed is formed in the current cockpit, and when all of the plurality of seats are in the reclined state, the plurality of physical partitions are re-divided into one dimming partition.

In some examples, as illustrated by Fig. 1, the cockpit 200 further includes a plurality of wheels 230. Of course, the cockpit 200 may also include other components, which will not be described again here.

Fig. 3A and Fig. 3B are schematic diagrams of automatic partitioning of dimmable glass according to an embodiment of the present disclosure. As illustrated by Fig. 3A, taking a six-seater car as an example, all six seats 210 in the cockpit 200 are in a reclined state, and the number of users is two. At this time, the six physical partitions are re-divided into one dimming partition 120, and the dimming partition 120 includes six physical partitions. As illustrated by Fig. 3B, all six seats 210 in the cockpit 200 are in a reclined state, and the number of users is one. At this time, the six physical partitions are re-divided into one dimming partition 120, and the dimming partition 120 includes six physical partitions. Thus, when all of the plurality of seats in the cockpit are in a reclined state, regardless of the number of users, the plurality of physical partitions can be re-divided into one dimming partition.

In some examples, the aforementioned user state includes a number of users and user positions, and re-dividing the plurality of physical partitions of the dimmable glass into at least one dimming partition according to the cockpit state further includes: detecting the number of users and the user positions; when the seat state is that at least one seat is not reclined, re-dividing the plurality of physical partitions of the dimmable glass into at least one dimming partition according to the number of users and the user positions. When at least one seat is not reclined, it indicates that not all of the plurality of seats in the cockpit form a bed. At this time, the plurality of physical partitions of the dimmable glass can be re-divided into at least one dimming partition according to the number of users and the user positions.

In some examples, re-dividing the plurality of physical partitions of the dimmable glass into at least one dimming partition according to the number of users and the user positions includes: when the number of users is one, re-dividing the plurality of physical partitions into one dimming partition. Although at least one seat is not reclined, because the number of users is only one, it is only needed to re-divide the plurality of physical partitions of the dimmable glass into at least one dimming partition.

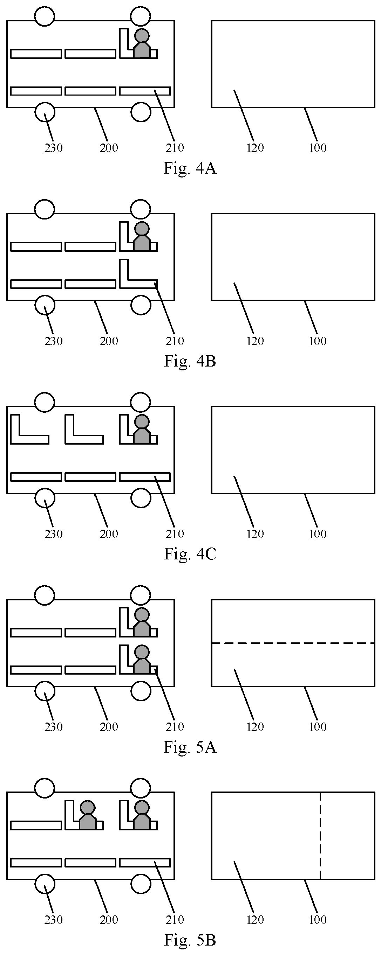

Fig. 4A-Fig. 4C are schematic diagrams of another automatic partitioning of dimmable glass according to an embodiment of the present disclosure. As illustrated by Fig. 4A, taking a six-seater car as an example, among the six seats 210 in the cockpit 200, one seat is in a non-reclined state, i.e., the seat back is upright, five seats 210 are in a reclined state, and the number of users is one. At this time, the six physical partitions are re-divided into one dimming partition 120, and the dimming partition 120 includes six physical partitions. As illustrated by Fig. 4B, among the six seats 210 in the cockpit 200, two seats are in a non-reclined state, i.e., the seat back is upright, four seats 210 are in a reclined state, and the number of users is one. At this time, the six physical partitions are re-divided into one dimming partition 120, and the dimming partition 120 includes six physical partitions. As illustrated by Fig. 4C, among the six seats 210 in the cockpit 200, three seats are in a non-reclined state, i.e., the seat back is upright, three seats 210 are in a reclined state, and the number of users is one. At this time, the six physical partitions are re-divided into one dimming partition 120, and the dimming partition 120 includes six physical partitions. Thus, when there is at least one seat in a non-reclined state in the cockpit and the number of users is one, the plurality of physical partitions can be re-divided into one dimming partition.

In some examples, re-dividing the plurality of physical partitions of the dimmable glass into at least one dimming partition according to the number of users and the user positions includes: when the number of users is N, re-dividing the plurality of physical partitions into N dimming partitions according to the number of users, each of the users is assigned one of the dimming partitions, where N is a positive integer greater than or equal to 1. Thus, the automatic partitioning method assigns one dimming partition to each user, so that each user's light environment can be adjusted.

Fig. 5A and Fig. 5B are schematic diagrams of another automatic partitioning of dimmable glass according to an embodiment of the present disclosure. As illustrated by Fig. 5A, taking a six-seater car as an example, the two seats 210 in the first row of the cockpit 200 are in a non-reclined state, i.e., the seat back is upright, and the seats 210 in the second and third rows are in a reclined state, and the number of users is two, both located in the first row; at this time, the six physical partitions are re-divided into two dimming partitions 120, and each user is assigned one dimming partition 120. As illustrated by Fig. 5B, in the cockpit 200, one seat 210 in the first row is in a non-reclined state, i.e., the seat back is upright, and the other seat is in a reclined state; one seat 210 in the second row is in a non-reclined state, and the other seat is in a reclined state; the two seats 210 in the third row are in a reclined state; the number of users is two, one located in the first row and the other located in the second row; at this time, the six physical partitions are re-divided into two dimming partitions 120, and each user is assigned one dimming partition 120.

For example, as illustrated by Figs. 5A and 5B, the vehicle has a traveling direction. When users are distributed in the traveling direction, the six physical partitions can be re-divided into two dimming partitions in the traveling direction. When users are distributed in a direction intersecting the traveling direction, the six physical partitions can be re-divided into two dimming partitions in the left-right direction.

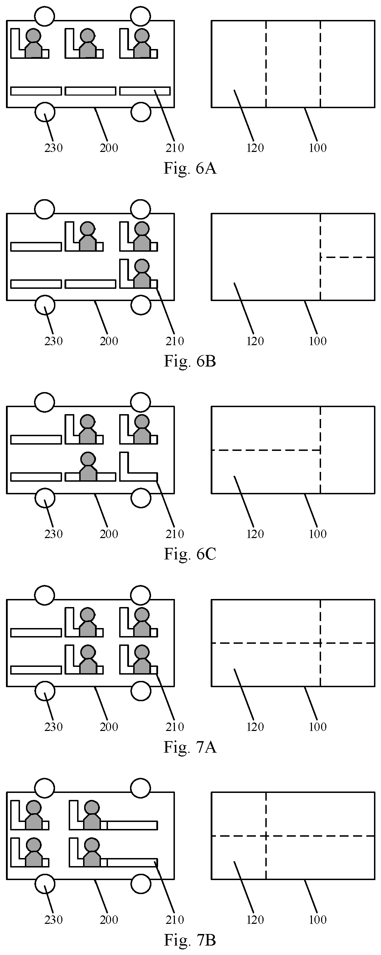

Fig. 6A-Fig. 6C are schematic diagrams of another automatic partitioning of dimmable glass according to an embodiment of the present disclosure. As illustrated by Fig. 6A, taking a six-seater car as an example, in the cockpit 200, one seat 210 in the first row is in a non-reclined state, i.e., the seat back is upright, and the other seat 210 is in a reclined state; one seat 210 in the second row is in a non-reclined state, and the other seat 210 is in a reclined state; one seat 210 in the third row is in a non-reclined state, and the other seat 210 is in a reclined state; the number of users is three, respectively located in the first row, the second row, and the third row; at this time, the six physical partitions are re-divided into three dimming partitions 120, and each user is assigned one dimming partition 120. As illustrated by Fig. 6B, in the cockpit 200, the two seats 210 in the first row are in a non-reclined state, i.e., the seat back is upright; one seat 210 in the second row is in a non-reclined state, and the other seat 210 is in a reclined state; the two seats 210 in the third row are in a reclined state; the number of users is three, two users are located in the first row, and one user is located in the second row; at this time, the six physical partitions are re-divided into three dimming partitions 120, and each user is assigned one dimming partition 120. As illustrated by Fig. 6C, in the cockpit 200, the two seats 210 in the first row are in a non-reclined state, i.e., the seat back is upright; one seat 210 in the second row is in a non-reclined state, and the other seat 210 is in a reclined state; the two seats 210 in the third row are in a reclined state; the number of users is three, one user is located in the first row, one user is located on the non-reclined seat 210 in the second row, and another user is located on the reclined seat 210 in the second row; at this time, the six physical partitions are re-divided into three dimming partitions 120, and each user is assigned one dimming partition 120.

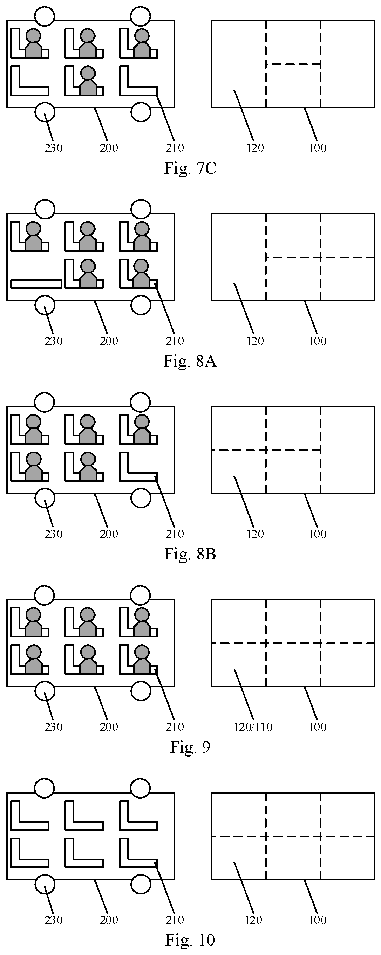

Fig. 7A-Fig. 7C are schematic diagrams of another automatic partitioning of dimmable glass according to an embodiment of the present disclosure. As illustrated by Fig. 7A, taking a six-seater car as an example, in the cockpit 200, the two seats 210 in the first row are in a non-reclined state, i.e., the seat back is upright; the two seats 210 in the second row are in a non-reclined state; the two seats 210 in the third row are in a reclined state; the number of users is four, two users are respectively located on the two seats 210 in the first row, and the other two users are respectively located on the two seats 210 in the second row; at this time, the six physical partitions are re-divided into four dimming partitions 120, and each user is assigned one dimming partition 120. As illustrated by Fig. 7B, in the cockpit 200, the two seats 210 in the first row are in a reclined state; the two seats 210 in the second row are in a non-reclined state; the two seats 210 in the third row are in a non-reclined state; the number of users is four, two users are respectively located on the two seats 210 in the second row, and two users are located on the two seats 210 in the third row; at this time, the six physical partitions are re-divided into four dimming partitions 120, and each user is assigned one dimming partition 120. As illustrated by Fig. 7C, in the cockpit 200, the two seats 210 in the first row are in a non-reclined state, i.e., the seat back is upright; the two seats 210 in the second row are in a non-reclined state; the two seats 210 in the third row are in a non-reclined state; the number of users is four, one user is located on one seat 210 in the first row, two users are respectively located on the two seats 210 in the second row, and another user is located on one seat 210 in the third row; at this time, the six physical partitions are re-divided into four dimming partitions 120, and each user is assigned one dimming partition 120.

Fig. 8A-Fig. 8B are schematic diagrams of another automatic partitioning of dimmable glass according to an embodiment of the present disclosure. As illustrated by Fig. 8A, taking a six-seater car as an example, in the cockpit 200, the two seats 210 in the first row are in a non-reclined state, i.e., the seat back is upright; the two seats 210 in the second row are in a non-reclined state; one seat 210 in the third row is in a reclined state, and the other seat 210 is in a non-reclined state; the number of users is five, two users are respectively located on the two seats 210 in the first row, two users are respectively located on the two seats 210 in the second row, and another user is located on one seat 210 in the third row; at this time, the six physical partitions are re-divided into five dimming partitions 120, and each user is assigned one dimming partition 120. As illustrated by Fig. 8B, in the cockpit 200, the two seats 210 in the first row are in a non-reclined state; the two seats 210 in the second row are in a non-reclined state; the two seats 210 in the third row are in a non-reclined state; the number of users is five, one user is located on one seat 210 in the first row, two users are respectively located on the two seats 210 in the second row, and two users are located on the two seats 210 in the third row; at this time, the six physical partitions are re-divided into five dimming partitions 120, and each user is assigned one dimming partition 120.

Fig. 9 is a schematic diagram of another automatic partitioning of dimmable glass according to an embodiment of the present disclosure. As illustrated by Fig. 9, taking a six-seater car as an example, in the cockpit 200, the two seats 210 in the first row are in a non-reclined state, i.e., the seat back is upright; the two seats 210 in the second row are in a non-reclined state; the two seats 210 in the third row are in a non-reclined state; the number of users is six, two users are respectively located on the two seats 210 in the first row, two users are respectively located on the two seats 210 in the second row, and the other two users are located on the two seats 210 in the third row; at this time, the six physical partitions are re-divided into six dimming partitions 120, and each user is assigned one dimming partition 120.

In some examples, the aforementioned cockpit state only includes a seat state and does not include a user state. The above-mentioned re-dividing the plurality of physical partitions of the dimmable glass into at least one dimming partition according to the cockpit state includes: respectively determining whether a plurality of seats in the cockpit are in a reclined state; when the seat state is that all of the plurality of seats are in the reclined state, re-dividing the plurality of physical partitions into one dimming partition. That is, the automatic partitioning method can perform automatic partitioning only based on the seat state.

In some examples, re-dividing the plurality of physical partitions of the dimmable glass into at least one dimming partition according to the cockpit state includes: when the seat state is that at least one seat is not reclined, determining a number of seats in a non-reclined state; re-dividing the plurality of physical partitions of the dimmable glass into at least one dimming partition according to the number of seats in the non-reclined state, where each of the seats in the non-reclined state is assigned one of the dimming partitions. Because the seats in the non-reclined state can be used by users independently, they can be assigned an independent dimming partition. Therefore, the automatic partitioning method re-divides the plurality of physical partitions of the dimmable glass into at least one dimming partition according to the number of seats in the non-reclined state.

In some examples, the vehicle includes a traveling direction, and re-dividing the plurality of physical partitions of the dimmable glass into at least one dimming partition according to the number of seats in the non-reclined state includes: dividing the seats in a reclined state and the seats in a non-reclined state that are adjacent in the traveling direction into the same dimming partition. Seats in a reclined state and seats in a non-reclined state that are adjacent in the traveling direction can form a recliner or bed. Thus, the seats in a reclined state and the seats in a non-reclined state that are adjacent in the traveling direction can be divided into the same dimming partition. Of course, the embodiments of the present disclosure include but are not limited thereto, and seats in a reclined state and seats in a non-reclined state that are adjacent in the left-right direction may also be divided into the same dimming partition.

Fig. 10 is a schematic diagram of another automatic partitioning of dimmable glass according to an embodiment of the present disclosure. As illustrated by Fig. 10, taking a six-seater car as an example, in the cockpit 200, the two seats 210 in the first row are in a non-reclined state, i.e., the seat back is upright; the two seats 210 in the second row are in a non-reclined state; the two seats 210 in the third row are in a non-reclined state; at this time, the six physical partitions are re-divided into six dimming partitions 120, and each dimming partition 120 includes one physical partition.

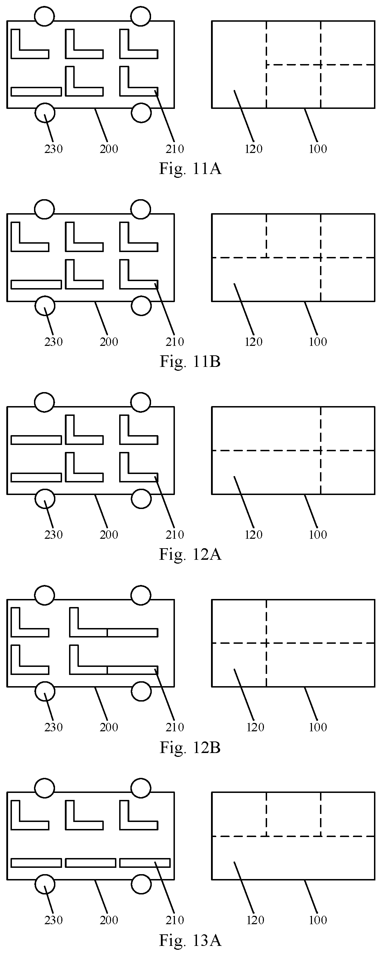

Fig. 11A-Fig. 11B are schematic diagrams of another automatic partitioning of dimmable glass according to an embodiment of the present disclosure. As illustrated by Fig. 11A, taking a six-seater car as an example, in the cockpit 200, the two seats 210 in the first row are in a non-reclined state, i.e., the seat back is upright; the two seats 210 in the second row are in a non-reclined state; one seat 210 in the third row is in a reclined state, and the other seat 210 is in a non-reclined state; at this time, the six physical partitions are re-divided into five dimming partitions 120, each non-reclined seat 210 is assigned one dimming partition 120, and the two seats in the third row are divided into the same dimming partition 120. As illustrated by Fig. 11B, in the cockpit 200, the two seats 210 in the first row are in a non-reclined state; the two seats 210 in the second row are in a non-reclined state; one seat 210 in the third row is in a reclined state, and the other seat 210 is in a non-reclined state; at this time, the six physical partitions are re-divided into five dimming partitions 120, each non-reclined seat 210 is assigned one dimming partition 120, and the reclined seat 210 in the third row and the non-reclined seat 210 in the second row are divided into the same dimming partition 120.

Fig. 12A-Fig. 12B are schematic diagrams of another automatic partitioning of dimmable glass according to an embodiment of the present disclosure. As illustrated by Fig. 12A, taking a six-seater car as an example, in the cockpit 200, the two seats 210 in the first row are in a non-reclined state, i.e., the seat back is upright; the two seats 210 in the second row are in a non-reclined state; the two seats 210 in the third row are in a reclined state; at this time, the six physical partitions are re-divided into four dimming partitions 120, each non-reclined seat 210 is assigned one dimming partition 120, and the two seats 210 in the third row are respectively divided into the same dimming partition 120 as the adjacent seats in the second row. As illustrated by Fig. 12B, taking a six-seater car as an example, in the cockpit 200, the two seats 210 in the first row are in a reclined state; the two seats 210 in the second row are in a non-reclined state; the two seats 210 in the third row are in a non-reclined state; at this time, the six physical partitions are re-divided into four dimming partitions 120, each non-reclined seat 210 is assigned one dimming partition 120, and the two seats 210 in the first row are respectively divided into the same dimming partition 120 as the adjacent seats in the second row.

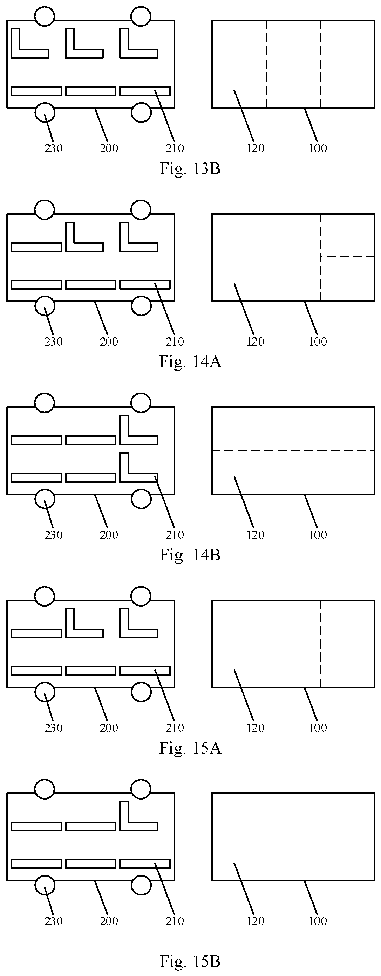

Fig. 13A-Fig. 13B are schematic diagrams of another automatic partitioning of dimmable glass according to an embodiment of the present disclosure. As illustrated by Fig. 13A, taking a six-seater car as an example, in the cockpit 200, one seat 210 in the first row is in a non-reclined state, i.e., the seat back is upright, and the other seat 210 is in a reclined state; one seat 210 in the second row is in a non-reclined state, and the other seat 210 is in a reclined state; one seat 210 in the third row is in a non-reclined state, and the other seat 210 is in a reclined state; at this time, the six physical partitions are re-divided into four dimming partitions 120, each non-reclined seat 210 is assigned one dimming partition 120, and the three reclined seats 210 in the first row, second row, and third row are divided into the same dimming partition 120. As illustrated by Fig. 13B, taking a six-seater car as an example, in the cockpit 200, one seat 210 in the first row is in a non-reclined state, i.e., the seat back is upright, and the other seat 210 is in a reclined state; one seat 210 in the second row is in a non-reclined state, and the other seat 210 is in a reclined state; one seat 210 in the third row is in a non-reclined state, and the other seat 210 is in a reclined state; at this time, the six physical partitions are re-divided into three dimming partitions 120, each non-reclined seat 210 is assigned one dimming partition 120, the two seats 210 in the first row are divided into the same dimming partition 120, the two seats 210 in the second row are divided into the same dimming partition 120, and the two seats 210 in the third row are divided into the same dimming partition 120.

Fig. 14A-Fig. 14B are schematic diagrams of another automatic partitioning of dimmable glass according to an embodiment of the present disclosure. As illustrated by Fig. 14A, taking a six-seater car as an example, in the cockpit 200, the two seats 210 in the first row are in a non-reclined state, i.e., the seat back is upright; the two seats 210 in the second row are in a reclined state; the two seats 210 in the third row are in a reclined state; at this time, the six physical partitions are re-divided into two dimming partitions 120, each non-reclined seat 210 is assigned one dimming partition 120, and the reclined seats 210 in the second row and third row and the first row seats adjacent in the traveling direction are divided into the same dimming partition 120. As illustrated by Fig. 14B, in the cockpit 200, one seat 210 in the first row is in a reclined state, and the other seat is in a non-reclined state; one seat 210 in the second row is in a reclined state, and the other seat is in a non-reclined state; the two seats 210 in the third row are in a reclined state; at this time, the six physical partitions are re-divided into two dimming partitions 120, each non-reclined seat 210 is assigned one dimming partition 120, the reclined seat 210 in the first row and the non-reclined seat 210 in the first row are divided into the same dimming partition, and the reclined seats 210 in the second row and third row and the non-reclined seat 210 in the second row are divided into the same dimming partition.

Fig. 15A-Fig. 15B are schematic diagrams of another automatic partitioning of dimmable glass according to an embodiment of the present disclosure. As illustrated by Fig. 15A, taking a six-seater car as an example, in the cockpit 200, one seat 210 in the first row is in a reclined state, and the other seat is in a non-reclined state; the two seats 210 in the second row are in a reclined state; the two seats 210 in the third row are in a reclined state; at this time, the six physical partitions are re-divided into one dimming partition 120, and the dimming partition 120 includes six physical partitions. As illustrated by Fig. 15B, taking a six-seater car as an example, in the cockpit 200, one seat 210 in the first row is in a reclined state, and the other seat is in a non-reclined state; the two seats 210 in the second row are in a reclined state; the two seats 210 in the third row are in a reclined state; at this time, the six physical partitions are re-divided into two dimming partitions 120, the non-reclined seat 210 is assigned one dimming partition 120, and the other five reclined seats 210 are assigned one dimming partition 120.

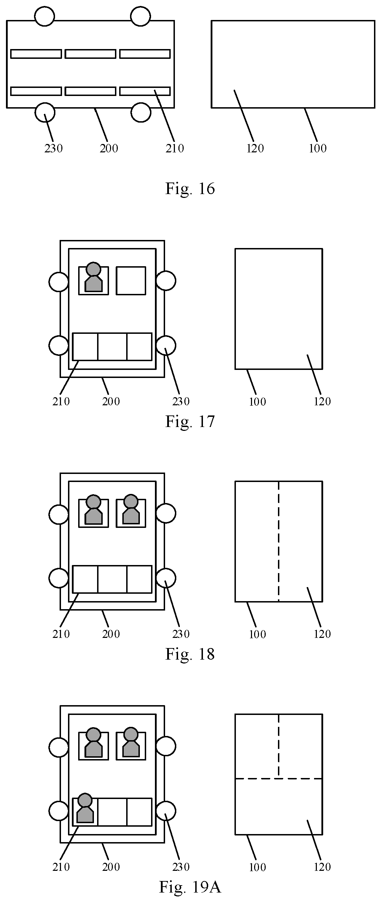

Fig. 16 is a schematic diagram of another automatic partitioning of dimmable glass according to an embodiment of the present disclosure. As illustrated by Fig. 16, taking a six-seater car as an example, all six seats 210 in the cockpit 200 are reclined, and at this time, the six physical partitions are re-divided into one dimming partition 120.

In some examples, the aforementioned cockpit state may also only include a user state and not include a seat state; at this time, the user state includes a number of users and user positions, and re-dividing the plurality of physical partitions of the dimmable glass into at least one dimming partition according to the cockpit state includes: detecting the number of users and the user positions; re-dividing the plurality of physical partitions into one dimming partition according to the number of users and the user positions. Thus, the automatic partitioning method can perform automatic partitioning according to the number and positions of users.

In some examples, re-dividing the plurality of physical partitions into one dimming partition according to the number of users and the user positions includes: when the number of users is one, re-dividing the plurality of physical partitions into one dimming partition.

In some examples, re-dividing the plurality of physical partitions into one dimming partition according to the number of users and the user positions includes: when the number of users is N, re-dividing the plurality of physical partitions into N dimming partitions according to the number of users, each of the users is assigned one of the dimming partitions, where N is a positive integer greater than or equal to 1.

Fig. 17 is a schematic diagram of another automatic partitioning of dimmable glass according to an embodiment of the present disclosure. As illustrated by Fig. 17, taking a five-seater car as an example, when the number of users is one, the five physical partitions corresponding to the five seats 210 are divided into one dimming partition 120.

Fig. 18 is a schematic diagram of another automatic partitioning of dimmable glass according to an embodiment of the present disclosure. As illustrated by Fig. 18, taking a five-seater car as an example, when the number of users is two, the five physical partitions corresponding to the five seats 210 are divided into two dimming partitions 120, and each user is assigned one dimming partition 120.

For example, as illustrated by Fig. 18, two users are respectively located on the two front seats 210, and the two dimming partitions 120 are arranged in the left-right direction.

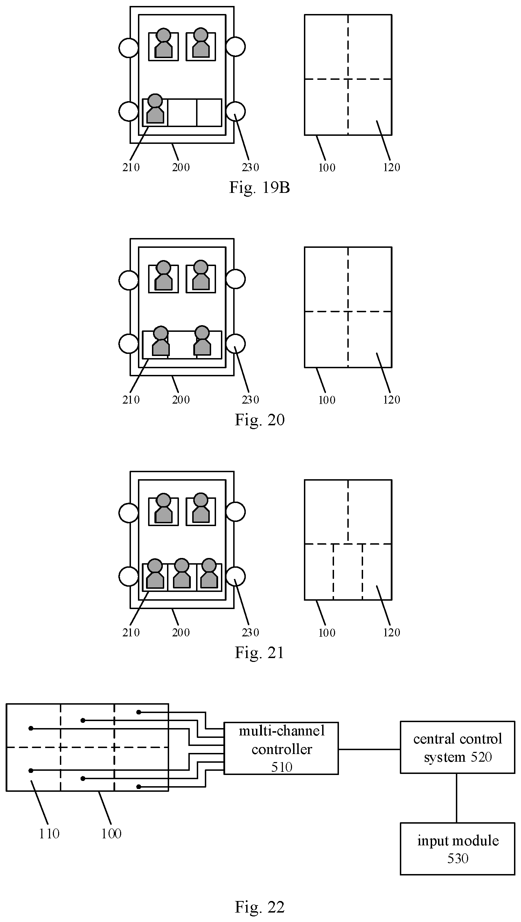

Fig. 19A-Fig. 19B are schematic diagrams of another automatic partitioning of dimmable glass according to an embodiment of the present disclosure. As illustrated by Fig. 19A, taking a five-seater car as an example, when the number of users is three, the five physical partitions corresponding to the five seats 210 are divided into three dimming partitions 120, and each user is assigned one dimming partition 120. As illustrated by Fig. 19B, when the number of users is three, the five physical partitions corresponding to the five seats 210 may also be divided into four dimming partitions 120, and each user is assigned one dimming partition 120.

Fig. 20 is a schematic diagram of another automatic partitioning of dimmable glass according to an embodiment of the present disclosure. As illustrated by Fig. 20, taking a five-seater car as an example, when the number of users is four, the five physical partitions corresponding to the five seats 210 are divided into four dimming partitions 120, and each user is assigned one dimming partition 120.

Fig. 21 is a schematic diagram of another automatic partitioning of dimmable glass according to an embodiment of the present disclosure. As illustrated by Fig. 21, taking a five-seater car as an example, when the number of users is five, the five physical partitions corresponding to the five seats 210 are divided into five dimming partitions 120, and each user is assigned one dimming partition 120.

In some examples, the dimmable glass includes a roof glass, and the physical partitions on the roof glass overlap with the corresponding seats in a direction perpendicular to the roof glass, i.e., the orthographic projection of the seat on the roof glass overlaps with the corresponding physical partition.

In some examples, the dimmable glass simultaneously includes a roof glass and window glasses, and each window glass respectively corresponds to one physical partition. Therefore, in the above automatic partitioning method, the window glass can also be divided into the dimming partition where the adjacent seat is located, thereby providing a better light environment for each dimming partition.

Fig. 22 is a schematic diagram of an automatic partitioning system for dimmable glass according to an embodiment of the present disclosure.

As illustrated by Fig. 22, the dimmable glass 100 includes a plurality of physical partitions, each of the plurality of physical partitions is configured to receive an individual control signal to change light transmittance.

For example, each of the plurality of physical partitions is provided with an independent drive electrode and a drive line connected to the drive electrode. A controller can control the light transmittance of each physical partition by applying a control signal to the drive electrode.

As illustrated by Fig. 22, the automatic partitioning system 500 includes a multi-channel controller 510 and a central control system 520; the multi-channel controller 510 is respectively connected to the plurality of physical partitions and is configured to respectively apply control signals to the plurality of physical partitions; the central control system 520 is communicatively connected to the multi-channel controller 510 and is configured to execute the above automatic partitioning method, and then control the multi-channel controller 510 to send the same control signal to the physical partitions in the same dimming partition 120, each dimming partition 120 includes at least one physical partition. The automatic partitioning method includes the automatic partitioning method provided in any of the above examples, for example, including the following steps: detecting a cockpit state of a cockpit of a vehicle equipped with the dimmable glass; re-dividing the plurality of physical partitions of the dimmable glass into at least one dimming partition according to the cockpit state.

In the embodiment of the present disclosure, according to the cockpit state, such as the number and distribution of users and the seat state, the automatic partitioning system re-divides the plurality of physical partitions of the dimmable glass into at least one dimming partition, so that the dimming partition can match the cockpit state, and the physical partitions in the same dimming partition are configured to receive the same control signal. At this time, the user or the central control system only needs to send an instruction or signal to the dimming partition to complete the dimming of the entire dimming partition, greatly reducing the difficulty of user operation and providing a uniform light environment for each dimming area, thereby enhancing the user experience.

In some examples, the cockpit includes a plurality of seats, and the plurality of physical partitions are arranged in one-to-one correspondence with the plurality of seats. Because the position of the user in the cockpit is usually determined by the position of the seat, the light environment required by the user can also correspond to the seat, thereby providing different light environments for different users.

Taking a six-seater car as an example, when all six seats are reclined and there is only one user, the entire cockpit only needs one dimming partition; at this time, the user only needs to perform one operation to adjust the light environment of the entire cockpit, without separately adjusting the physical partitions corresponding to the six seats. Still taking a six-seater car as an example, when the front two of the six seats remain upright, the rear four are all reclined, one user is in the front row, and another user is in the rear two rows, the entire cockpit only needs two dimming partitions; at this time, the front row user only needs to perform one operation to adjust the front row light environment according to his needs, without adjusting the two physical partitions corresponding to the front row, and the rear row user also only needs to perform one operation to adjust the rear row light environment according to his needs, without adjusting the four physical partitions corresponding to the rear row. It should be noted that because there is a situation where all six seats remain upright and there are six users, the dimmable glass should have at least six physical partitions, but in other application scenarios, so many partitions are not needed. Therefore, the above automatic partitioning method can meet more application scenarios while maintaining high efficiency and convenience.

In some examples, as illustrated by Fig. 22, the automatic partitioning system 500 further includes: an input module 530, communicatively connected to the central control system 520; the input module is configured to receive a user's control instruction, and the central control system is further configured for: determining the dimming partition where the user is located according to the user's position; and controlling the multi-channel controller to send the same control signal to the at least one physical partition in the dimming partition where the user is located. Thus, the automatic partitioning system can receive the user's control instruction through the input module to adjust the light environment of the dimming partition where the user is located. Moreover, the automatic partitioning system can also automatically determine the dimming partition where the user is located, without requiring the user to select or operate, further reducing the difficulty of operation and improving convenience.

For example, the above input module may include at least one of physical buttons, a touch screen, a knob, etc.

In some examples, the above-mentioned determining the dimming partition where the user is located according to the user's position includes: determining the seat where the user is located; determining the dimming partition where the user is located according to the physical partition corresponding to the seat where the user is located. Thus, the automatic partitioning system can determine the dimming partition where the user is located based on the user's position.

In some examples, the above-mentioned cockpit state includes at least one of a seat state and a user state. The seat state may include whether a seat is reclined, and the user state includes the number of users and their distribution within the cockpit.

In some examples, the cockpit state includes a seat state and a user state, and the central control system 520 is configured for: obtaining data of the seat state, and determine whether a plurality of seats in the cockpit are in a reclined state based on the obtained data; if so, re-dividing the plurality of physical partitions of the dimmable glass into one dimming partition. At this time, the input module 530 receives an input instruction from the user and sends the input instruction to the central control system 520; the central control system 520 then controls the multi-channel controller 510 to send the same control signal corresponding to the input instruction to the physical partitions in the same dimming partition 120; the dimmable glass 100 changes the light transmittance or color according to the control signal.

In some examples, if the central control system 520 determines based on the obtained data that the plurality of seats in the cockpit are not all in the reclined state; the central control system 520 then obtains the number of users, and when the central control system 520 determines that there is only one user, re-divides the plurality of physical partitions of the dimmable glass into one dimming partition. At this time, the input module 530 receives an input instruction from the user and sends the input instruction to the central control system 520; the central control system 520 then controls the multi-channel controller 510 to send the same control signal corresponding to the input instruction to the physical partitions in the same dimming partition 120; the dimmable glass 100 changes the light transmittance or color according to the control signal.

In some examples, when the central control system 520 determines that there is more than one user, the central control system 520 obtains the number of users and the user distribution, and then re-divides the plurality of physical partitions of the dimmable glass into at least one dimming partition according to the seat state, the number of users, and the user distribution. At this time, the input module 530 receives an input instruction from the user and sends the input instruction to the central control system 520; the central control system 520 then controls the multi-channel controller 510 to send the same control signal corresponding to the input instruction to the physical partitions in the same dimming partition 120; the dimmable glass 100 changes the light transmittance or color according to the control signal.

It is worth noting that because the central control system is configured to execute the above automatic partitioning method, the automatic partitioning method of the central control system can be referred to the relevant description of the automatic partitioning method embodiments, which will not be repeated here.

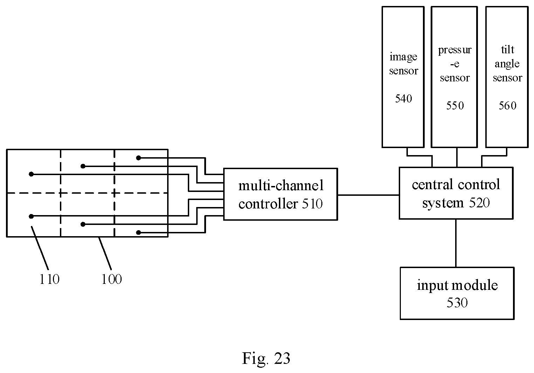

Fig. 23 is a schematic diagram of another automatic partitioning system for dimmable glass according to an embodiment of the present disclosure.

In some examples, as illustrated by Fig. 23, the automatic partitioning system 500 further includes an image sensor 540 configured to acquire an image inside the cockpit to obtain at least one of the seat state and the user state.

For example, the image inside the cockpit can be acquired by the image sensor 540, and then recognition is performed based on the image to determine the seat state and the user state. Of course, the embodiments of the present disclosure include but are not limited thereto, and the automatic partitioning system may also include an infrared sensor to increase the accuracy of determination.

In some examples, as illustrated by Fig. 23, the automatic partitioning system 500 further includes a pressure sensor 550 and a tilt angle sensor 560; the pressure sensor 550 is configured to be disposed on a seat in the cockpit and is configured to detect pressure on the seat; the tilt angle sensor 560 is disposed on the seat in the cockpit and is configured to detect a tilt angle of a seat back, thereby determining whether the seat is reclined.

For example, when the tilt angle sensor 560 detects that the angle between the seat back and the seat cushion is close to 180 degrees, it can be determined that the seat is reclined. It should be noted that the angle between the seat back and the seat cushion used to determine whether the seat is reclined may be determined according to the specific structure of the seat, and this angle may also be other angles.

The following points need to be explained:
(1) In the drawings of the embodiment of the present disclosure, only the structure related to the embodiment of the present disclosure is involved, and other structures can refer to the general design.
(2) In case of no conflict, features in the same embodiment and different embodiments of the present disclosure can be combined with each other.

The above are only specific embodiments of the present disclosure, but the protection scope of the present disclosure is not limited thereto. Therefore, the scope of protection of the present disclosure should be based on the scope of protection of the claims.

## Claims

1. An automatic partitioning method for dimmable glass, wherein the dimmable glass comprises a plurality of physical partitions, each of the plurality of physical partitions is configured to receive an individual control signal to change light transmittance, and the automatic partitioning method comprises:
detecting a cockpit state of a cockpit of a vehicle equipped with the dimmable glass; and
re-dividing the plurality of physical partitions of the dimmable glass into at least one dimming partition according to the cockpit state,
wherein each of the at least one dimming partition comprises at least one physical partition of the plurality of physical partitions, and the at least one physical partition in a same dimming partition is configured to receive a same control signal.

2. The automatic partitioning method according to claim 1, further comprising:
receiving a control instruction from a user;
determining a dimming partition where the user is located according to the user's position; and
sending a same control signal to the at least one physical partition in the dimming partition where the user is located.

3. The automatic partitioning method according to claim 2, wherein determining the dimming partition where the user is located according to the user's position comprises:
determining a seat where the user is located;
determining the dimming partition where the user is located according to a physical partition corresponding to the seat where the user is located.

4. The automatic partitioning method according to claim 3, wherein the cockpit comprises a plurality of seats, and the plurality of physical partitions are arranged in one-to-one correspondence with the plurality of seats.

5. The automatic partitioning method according to any one of claims 1-4, wherein the cockpit state comprises at least one of a seat state and a user state.

6. The automatic partitioning method according to claim 5, wherein the cockpit state comprises the seat state and the user state, and re-dividing the plurality of physical partitions of the dimmable glass into at least one dimming partition according to the cockpit state comprises:
respectively determining whether a plurality of seats in the cockpit are in a reclined state;
when the seat state is that all of the plurality of seats are in the reclined state, re-dividing the plurality of physical partitions into one dimming partition.

7. The automatic partitioning method according to claim 6, wherein the user state comprises a number of users and user positions, and re-dividing the plurality of physical partitions of the dimmable glass into at least one dimming partition according to the cockpit state further comprises:
detecting the number of users and the user positions;
when the seat state is that at least one of the plurality of seats is not reclined, re-dividing the plurality of physical partitions of the dimmable glass into at least one dimming partition according to the number of users and the user positions.

8. The automatic partitioning method according to claim 7, wherein re-dividing the plurality of physical partitions of the dimmable glass into at least one dimming partition according to the number of users and the user positions comprises:
when the number of users is one, re-dividing the plurality of physical partitions into one dimming partition.

9. The automatic partitioning method according to claim 7, wherein re-dividing the plurality of physical partitions of the dimmable glass into at least one dimming partition according to the number of users and the user positions comprises:
when the number of users is N, re-dividing the plurality of physical partitions into N dimming partitions according to the number of users, each of the users is assigned one of the dimming partitions, where N is a positive integer greater than or equal to 1.

10. The automatic partitioning method according to claim 5, wherein the cockpit state comprises a seat state, and re-dividing the plurality of physical partitions of the dimmable glass into at least one dimming partition according to the cockpit state comprises:
respectively determining whether a plurality of seats in the cockpit are in a reclined state;
when the seat state is that all of the plurality of seats are in the reclined state, re-dividing the plurality of physical partitions into one dimming partition.

11. The automatic partitioning method according to claim 10, wherein re-dividing the plurality of physical partitions of the dimmable glass into at least one dimming partition according to the cockpit state comprises:
when the seat state is that at least one of the plurality of seats is not reclined, determining a number of seats in a non-reclined state;
re-dividing the plurality of physical partitions of the dimmable glass into at least one dimming partition according to the number of seats in the non-reclined state,
wherein each of the seats in the non-reclined state is assigned one of the dimming partitions.

12. The automatic partitioning method according to claim 11, wherein the vehicle comprises a traveling direction, and re-dividing the plurality of physical partitions of the dimmable glass into at least one dimming partition according to the number of seats in the non-reclined state comprises:
dividing seats in a reclined state and the seats in a non-reclined state that are adjacent in the traveling direction into the same dimming partition.

13. The automatic partitioning method according to claim 5, wherein the cockpit state comprises a user state, the user state comprises a number of users and user positions, and re-dividing the plurality of physical partitions of the dimmable glass into at least one dimming partition according to the cockpit state comprises:
detecting the number of users and the user positions;
re-dividing the plurality of physical partitions into one dimming partition according to the number of users and the user positions.

14. The automatic partitioning method according to claim 13, wherein re-dividing the plurality of physical partitions into one dimming partition according to the number of users and the user positions comprises:
when the number of users is one, re-dividing the plurality of physical partitions into one dimming partition.

15. The automatic partitioning method according to claim 13, wherein re-dividing the plurality of physical partitions into one dimming partition according to the number of users and the user positions comprises:
when the number of users is N, re-dividing the plurality of physical partitions into N dimming partitions according to the number of users, each of the users is assigned one of the dimming partitions, where N is a positive integer greater than or equal to 1.

16. An automatic partitioning system for dimmable glass, wherein the dimmable glass comprises a plurality of physical partitions, each of the plurality of physical partitions is configured to receive an individual control signal to change light transmittance, and the automatic partitioning system comprises:
a multi-channel controller, connected to the plurality of physical partitions respectively, and configured to respectively apply control signals to the plurality of physical partitions;
a central control system, communicatively connected to the multi-channel controller, the central control system being configured for:
detecting a cockpit state of a cockpit of a vehicle equipped with the dimmable glass;
re-dividing the plurality of physical partitions of the dimmable glass into at least one dimming partition according to the cockpit state; and
controlling the multi-channel controller to send a same control signal to physical partitions in a same dimming partition,
wherein each of the at least one dimming partition comprises at least one physical partition of the plurality of physical partitions.

17. The automatic partitioning system according to claim 16, further comprising:
an input module, communicatively connected to the central control system,
wherein the input module is configured to receive a control instruction from a user, and the central control system is further configured for:
determining a dimming partition where the user is located according to the user's position; and
controlling the multi-channel controller to send a same control signal to the at least one physical partition in the dimming partition where the user is located.

18. The automatic partitioning system according to claim 17, wherein the cockpit comprises a plurality of seats, and the plurality of physical partitions are arranged in one-to-one correspondence with the plurality of seats.

19. The automatic partitioning system according to claim 18, wherein determining the dimming partition where the user is located according to the user's position comprises:
determining a seat where the user is located;
determining the dimming partition where the user is located according to a physical partition corresponding to the seat where the user is located.

20. The automatic partitioning system according to any one of claims 16-19, wherein the cockpit state comprises at least one of a seat state and a user state.

21. The automatic partitioning system according to claim 20, further comprising:
an image sensor, configured to acquire an image inside the cockpit to obtain at least one of the seat state and the user state.

22. The automatic partitioning system according to claim 20, further comprising:
a pressure sensor, configured to be disposed on a seat in the cockpit and configured to detect pressure on the seat; and
a tilt angle sensor, disposed on the seat in the cockpit and configured to detect a tilt angle of a seat back.
